# EUROPEAN PATENT SPECIFICATION

(11) **EP 1 503 898 B1**
(45) Date of publication and mention of the grant of the patent: **11.02.2009**
(21) Application number: 03753068.0
(22) Date of filing: 16.05.2003
(51) Int. Cl.: B32B 27/32, B65D 65/40, B65D 3/22

(54) **METALLIZED HIGH BARRIER LAP-SEALABLE LINER FOR SPIRAL WOUNDS CONTAINERS**
METALLISIERTE HOCHSPERRENDE ÜBERLAPPUNGSABDICHTBARE AUSKLEIDUNG FÜR SPIRALFÖRMIG GEWICKELTE BEHÄLTER
DOUBLURE DE SCELLAGE PAR RECOUVREMENT A COUCHE BARRIERE METALLIQUE ELEVEE POUR CONTENANTS ENROULES EN SPIRALE

(30) Priority: 16.05.2002 US 147735
(43) Date of publication of application: 09.02.2005
(73) Proprietor: Toray, Plastics (America), Inc., North Kingstown, RI 02852 (US)
(72) Inventor: FATICA, Michael, G., Warwick, RI 02818 (US)
(74) Representative: Glawe, Delfs, Moll
(86) International application number: PCT/US2003/015528
(87) International publication number: WO 2003/097342

(56) References cited:
- EP-A- 0 628 407
- WO-A-97/02139
- US-A- 3 555 976
- US-A- 4 717 374

## Description

### Field of the Invention

This invention relates to high barrier lap-sealable barriers, particularly to metallized high barrier lap-sealable liners for spiral wound containers.

### Background

Polyethyleneterephthalate (PET) films are used for a host of converting, printing, coating and metallizing applications. The thermal stability, dimensional stability, chemical resistance and relative high surface energy of PET films are beneficial for typical enduse applications. For instance, PET films are often used as coating bases for magnetic tapes thermal transfer ribbon, packaging materials, thermal lamination and many other web converted products.

Spiral wound containers are used for packaging foods and perishable items. The rigidity of these containers is their distinguishing feature versus flexible packaging such as bags and pouches. While these containers typically have circular cross sectional shapes, many cross sectional shapes are possible. Rigidity is typically achieved with a thick structural component made of paperboard. Barrier properties are achieved with a liner. Many products packaged in such containers require protection from contamination of environment gases such as moisture or oxygen. In these containers, the paperboard structure is lined with a plastic layer or a plastic coated aluminum foil layer, depending on the barrier requirements of the intended contents. The liner renders the container impermeable and, thus, protects the contents from environmental gases as well as loss of content components by diffusion through the container.

Spiral wound containers can achieve good moisture vapor and oxygen barrier when the liner contains an aluminum foil component. The aluminum foil is coated with a plastic layer to protect the foil from abrasion damage from contact with the contents of the container. Such abrasion can cause holes to be formed in the aluminum foil that will sacrifice barrier against the transmission of gases, moisture and other materials through the aluminum foil. Often, the plastic coating layer also serves as a heat seal that can fuse the seam edges of the liner to improve the container's barrier. The rigid nature of these containers prevents cracks and hole damage to aluminum foil common in flexible packages.

One primary issue with the formation of the spiral container is that the spiral winding manufacturing process requires complex equipment to form special "anaconda" edge seams formed by fin-folded seals. Anaconda seams prevent leakage and wicking of moisture into the structural paperboard layer that is exposed at the spiral seams. While anaconda seams are effective in preventing moisture wicking, they consume more liner and result in a thick, raised seal area, which compromise seal ends at the bottom and top closures of the tubes. Solvent-based adhesive have allowed lap seals to be formed with aluminum-based liners. While this eliminates the end seal problem, these methods have environmental disadvantages due to solvents and aluminum foil. Also, the container manufacture is restricted to winding a composite material. Therefore, a recognized need exists for a non-aluminum foil liner that avoids the anaconda seam and adheres well to the paperboard, without the use of solvent based adhesives.

Tubular container designers have proposed metallized plastics to avoid the thickness, environmental and adhesion disadvantages of aluminum foil while meeting many of the barrier requirements. Unfortunately, a metallized polyester having strong lap seals (heat activated) with the preferred adhesives used for paperboard (LDPE, EVA, EMA, EAA, EMAA) has not been available. Previously, metallized polyester structures with affinity to paperboard adhesives and lap sealability have inherent problems in their manufacture due to poor metallization yield and resultant poor barrier.

As a means for solving the lap sealable problem for barrier liners in tubular cans, multilayered films with a plurality of layers and sublayers have been proposed by tubular can designers to meet the many requirements of the liner.

Descriptions of the liners have evolved in U.S. Patent Nos. 4717374, 5829669 and 6244500B1, disclosing methods of tubular container manufacture and a list of requirements for the ideal liner. In general these descriptions refer to only a few key functions for the liner, i.e., to provide a barrier and lap sealability to the structural paperboard backing. The list of requirements for an ideal barrier liner is much larger than the few key functions, as is evidenced by the complex diagrams for the liner as well as the many critical aspects of tubular can manufacture required for available liners.

For example, sealant layers of the liner with different heat activation temperatures between the inside and outside facing seal layers avoid sticking of the inward facing sealant to the mandrel during heat activation of the outward facing sealant layer's adhesion to the paperboard. Also, the inward and outward facing seal layers of the liner should have different adhesion characteristics. Otherwise, different tie layers are required to adhere each liner's sealant to its respective substrates in a barrier liner, e.g., the inward facing sealant's substrate is a plastic surface such as polyester and the outward facing sealant's substrate is a barrier layer such as an aluminized plastic layer. Different surface Coefficients of Friction (COF) for the inward and outward facing sealant layers allow easy spiral winding against a warm mandrel without sticking and stretching. Further, the outward facing adhesive used to bond the liner to the paperboard has different inward facing and outward facing sublayers to match the different characteristics between paperboard and the liner surfaces.

The requirements for manufacture of the ideal liner are not considered in the tubular container manufacturer's patents. The tubular container patents rarely disclose an example liner with specific materials. However, extremely poor barrier film manufacturing efficiency is expected for metallization of a film containing the proposed low softening temperature sealant layers. Thus, the limitations of actual materials for practical manufacture of the liner are avoided. For this reason, the need for such an improved liner still exists.

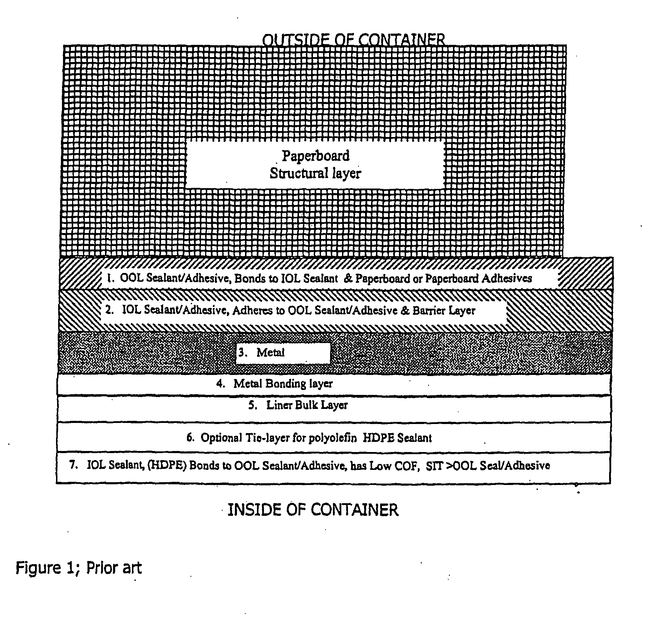

Tubular container designers have proposed a myriad of separate functional layers to resolve the many recognized functions required of a tubular container liner. Fig. 1 of U.S. Patent No. 6244500 B1 shows a barrier liner. Fig. 1 diagrammatically lists the total number of functional layers. It describes a Sealant/Adhesive between the liner and paperboard as consisting of an inward orienting sublayer (IOL) and an outward orienting sublayer (OOL), relative to the container. The need for so many separate sublayers is due to the recognized limitations of paperboard adhesives which do not have sufficient affinity to the plastic liner. Thus, sublayers are used for not only the paperboard Sealant/Adhesive, but also for the liner's Surface Sealant inward layer. A conventional barrier liner having at least 6 layers, as shown in Fig. 1, is listed below.
1. an outward facing sealant sublayer having compatibility with preferred paperboard or paperboard adhesives (polyethylene and polyethylene copolymers) and lap sealability to the inward facing sealant (6), as well as adhesion to (2) the inward sealant sublayer with adhesion to the barrier coating;
2. the inward sealant sublayer with adhesion to the barrier coating;
3. a metal or barrier layer;
4. an optional metal adhesion layer between the metal and plastic liner;
5. the structural component of the liner;
6. an optional adhesive tie-layer between the core liner layer and the inward facing sealant layer; and
7. the inward facing sealant layer.
8. It would accordingly be highly advantageous to provide aluminium foil-free liner that avoids anaconda seams and provides good lap heat seal strength to paperboard adhesives, while providing good barrier, good manufacturing yield and little negative environmental impact.

US-A-4,717,374 discloses a lap seal comprising a heat seal coating. The heat seal layer is not adjacent to the metal film.

### Summary of the Invention

This invention relates to a metallized, multilayer, high barrier, oriented thermoplastic polyester film suitable for forming an inner liner of a spiral wound container. It includes a core layer of polyester; a layer of a heat sealable copolyester positioned adjacent to one surface of the core layer; a metal film positioned adjacent an opposite surface of the core layer; and a barrier layer heat seal coating (BLHSC) positioned adjacent the metal film which is capable of adhering to the metal film and does not adhere to the heat sealable copolyester at ambient temperature.

In another aspect, the invention relates to a spiral wound container constructed from a web lamination of a paperboard substrate and a lap-sealable thermoplastic high barrier polyester constructed from an aluminized multilayer thermoplastic substrate comprising a core layer of polyester and at least one surface layer of hydrophobic copolyesters, the aluminized polyester film extrusion coated with a polyethylene based sealant capable of lap sealing to the copolyester surface layer.

### Brief Description of the Drawings

Fig. 1 is a schematic cross-section of a conventional liner.

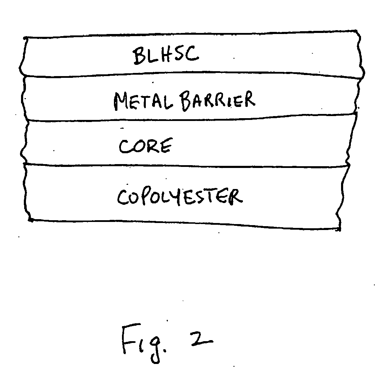

Fig. 2 is a schematic cross-section of a liner in accordance with the invention.

### Detailed Description

This invention addresses the above-mentioned problems of conventional metallized barrier films and provides a remedy, and other advantages, by providing a unique combination of materials, manufacturing processes and film designs to produce a moisture and gas barrier spiral wound can liner that does not contain aluminum foil. The invention applies to films, particularly films with more than one polymer layer and to their preparation, metallization and coating.

The multilayer basefilm (for applying a barrier coating layer and a sealant layer), according to the invention may be readily produced using melt coextrusion techniques that are known in the art. Either the multimanifold die or the feedblock method may be used in which individual layers meet under laminar flow conditions to provide an integral multilayer film.

Other manufacturing techniques may be used to prepare the inventive multilayer basefilm, such as interdraw lamination or coating (solution coating, dispersion coating or extrusion coating) of a monoaxially oriented core layer. The basefilm is prepared by the interdraw lamination or interdraw coating steps of first forming a polyester core, orienting the core in a first direction, providing on at least one side thereof a singe layer or multilayer cap layer, and orienting the resulting multilayer film in a second direction transverse to the first direction. The-cap layers comprise at least one outermost layer, but may comprise at least one tie layer interposed between the outermost layer and the core layer. The core layer may comprise a single layer, or a coextruded multilayer film having a surface layer providing a tie layer function. Interdraw coating or interdraw lamination of a monoaxially oriented core may be preferred over a melt coextrusion process described above where it is desirable to pretreat selected layers or the cap layer materials are not readily coextruded. An example of the interdraw coating method is US Patent No. 3741253 and an example of interdraw laminating is US Patent No. 5156904.

Materials useful in the practice of this invention for the crystalline core layer, as well as for an optional surface layer, comprise polyesters with a high glass transition temperature (Tg) above about 50C. The Tg is more preferably above about 60C and still more preferable above about 70C. Polyester materials which are the reaction product of a dicarboxylic acid or ester derivatives thereof, and a diol component are preferred. The dicarboxylic acid component may be either terephthalic acid or naphthalene dicarboxylic acid (such as dimethyl 2,6-naphthalene dicarboxylic acid) or ester derivatives thereof, and the diol component may be either ethylene glycol or 1,4-butanediol. Polyethylene terephthalate is especially preferred.

Other core layer materials are copolyester based on these materials and may be made by copolymerizing the terephthalic and/or naphthalene dicarboxylic acid component(s) with one or more other diacids, such as adipic, azelaic, sebacic, isophthalic, dibenzoic and cyclohexane dicarboxylic acids. Likewise, various crystalline copolyesters may be formed by copolymerizing ethylene glycol and/or 1,2-butanediol component(s) with one or more other diols such as diethylene glycol, propanediol, polyethylene glycol, polytetramethylene glycol, neopentyl glycol, cyclohexane dimethanol, 4-hydroxy diphenol, bisphenol A, and 1,8-dihydroxy biphenyl. Incorporating one or more other diacids and/or one or more diols into the polymerization mixture provides useful core layer copolyester. The amount of such materials may be varied over wide limits so long as the resulting polymer itself is stiff enough and crystalline enough to satisfy the orientation and heat setting temperatures required to produce a satisfactory oriented polyester film (tensile modulus, stretch resistant, creep resistant and dimensionally stable) for the chosen high speed barrier coating process and the spiral tubular can manufacturing process. Such processes preferably have film modulus, film creep and film dimensional stability requirements at elevated temperatures, for example, the heat activated lap sealing operation or the heat activated adhesion of the liner sealant to the paperboard backing during the spiral can manufacture process.

Preferred polyesters include polyethylene terephthalate, polyethylene naphthalate, polybutylene terephthalate, and polybutylene naphthalate.

To produce the desired surface roughness, inorganic or crosslinked organic particles are incorporated into the core or surface layers to create surface protrusions. The size and amount of these particles can vary over a wide range. The preferred size and amount of particles depends on the resulting degree of protrusion of these particles through any two adjacent surface layers and the desired level of film clarity. The resulting surface protrusion can depend on the thickness and properties of the adjacent surfaces layers, the size and amount of particles in the adjacent surface layers, the amount, rate, and temperature of orientation, the shape of the particles as well as other less defined process and particle material properties.

The preferred amount and size of particles in the core is about 0.05 wt% to about 0.5 wt% of the core layer, with a mean size of about 10 µm to about 0.1 µm and about 0.2 wt% to about 1 wt%, with a mean size of about 0.1 to about 0.5 µm. A more preferred amount and size of particles in the core layer depends on the amount and size of particles present in the surface layers.

The amount and size of particles can be adjusted by those skilled in the art, according to the following guiding principle. The copolyester heat sealable layer should have about 0.2 to about 0.3 wt%, preferably about 0.28 wt% particles, based on the weight of the heat sealable layer, of about 3.5 µm average size. The barrier receiving layer, if at least about 3 µm thick, should contain about 0.03 to about 0.1 wt% particles of about 1- about 4 µm mean size and about 0.03 to about 0.1 wt% particles of about 0.1 to about 0.5 µm size. If a barrier receiving layer is not used, or is thinner than about 0.1 µm, the core layer should contain a similar size and amount of particles as for the barrier-receiving layer. With a barrier receiving layer of thickness less than the size of the particles, proportionally more of the surface roughness must be achieved with particles in the core layer.

The copolyester heat sealable layer useful in this invention comprises copolyester based on the diacids and/or diols described above, but with amounts that substantially reduce the melting point (Tm), or crystalline content, and to a smaller extent lower the Tg. A preferred composition is a non crystalline copolyester, or a copolyester with a slow crystallization rate or a low crystalline content copolyester, derived from an aliphatic diacid and/or aliphatic diol where the aliphatic content of the diacid is more than about 40 wt% of the aliphatic diacid and the aliphatic content of the diol is more than about 60 wt% of the aliphatic diol.

A barrier coating receiving layer that may be used comprises polyesters from the above core layer materials, copolyesters from the above -heat seal layer materials, homopolymers or copolymers from acrylates and/or styrenics (various acrylic or methacrylic acid and esters, acrylamide and N-derivatives, acrylonitrile, styrene and derivatives, (a methyl styrene, ethylene and olefins, fumeric, maleic, maleimide, vinyl derivatives, vinyl ether derivatives as monofunctional monomers or polyfunctional monomers), ethylene copolymers with acrylates, vinylacetate or vinylalcohol. The barrier coating receiving layer may be applied prior to metallization or during the metallization process, so long as the layer meets the requirements of the high speed barrier coating process. A preferred barrier coating receiving layer is about 0.8 µm layer of polyvinylalcohol applied by the interdraw coating process. The barrier coating process can allow the individual parameters of the barrier coating receiving layer to vary over a wide range, such as thickness, surface roughness, stiffness, polarity and the like, provided good adhesion, good barrier and dimensional stability of the barrier coating is achieved.

The barrier coating, which is a metallic film, may be applied to the multilayered film using suitable means including sputtering, vacuum deposition, plasma assisted chemical vapor deposition or treatment, electroplating and the like. The barrier coating layer is preferably a metal or mixture of metals, the application of which results in a metallized film. Particularly appropriate barrier coatings include metals such as aluminum, or aluminum oxide or silicon oxide or other oxide materials or metals. The barrier coating is preferably applied at about 7.5 nm (75 A) to about 50 nm (500 A) thickness.

The barrier coating is itself coated or laminated with a barrier layer heat seal coating (BLHSC) that protects the barrier coating, adheres well to the barrier coating and is heat sealable to the heat seal copolyester layer on the opposite side of the film as well as adhering to paperboard or paperboard adhesives. The BLHSC applied to the barrier layer is preferably compatible with common adhesive coatings used in coating paperboard such as low density polyethylene (LDPE), blends composed substantially of LDPE or paperboard primers. This facilitates adhesion of the BLHSC layer to the paperboard structural component of a tubular can. It is also desirable that the heat seal activation temperature of the BLHSC layer to the paperboard and/or paperboard adhesives and primers is lower than the heat seal activation temperature between the heat seal copolyester layer and the steel mandrel used in winding spiral cans.

Materials that are useful for the BLHSC may be composed of a blend of about 10 to about 70wt % poly(ethylene-co-methylacrylate) (EMA), for example, OPETEM TC-120 from Exxon Chemical Corp., about 30 to about 70 wt% LDPE, for example, Chevron 1017 from Chevron Phillips Chemical Corp., about 0 to about 40% wt% poly(ethylene-comethylacrylate-co-acrylic acid) (EMA-EAA), for example, ESCOR AT-320 from Exxon Chemical Corp., and about 0 - about 40 wt % acid modified poly(ethylene-co-acrylic acid in the free acid form or as the sodium, zinc and other salts) and about 0.4 to about 5.0 wt % a particulate antiblock, for example, diatomaceous earth of 15 µm average particle size dispersed in LDPE at 20 wt% (DE-LDPE), from Ampacet Corp.

### Example 1

Polyethylene terephthalate (PET) pellets (61 ml/g (0.61 dl/g) intrinsic viscosity in 60/40 phenol/tetrachloroethane at 30°C) containing 0.078 wt % agglomerated silica of 3.1 - 3.6 µm average agglomerate particle size (agglomerates made of primary size 0.04 µm) were dried sufficiently to remove excess moisture to less than 50 ppm and then melted at 285°C in an extruder to produce melt stream (I) for the core layer.

Copolyester of poly(ethylene glycol-co-1,4-cyclohexane dimethanol) terephthalate of mole % 1,4-cyclohexane dimethanol (CHDM) (70 ml/g (0.70 dl/g) intrinsic viscosity) from Eastman Chemical Company of Kingsport TN, and known as Eastar 6763 was dry blended with PET pellets (61 ml/g (0.61 dl/g) intrinsic viscosity) containing 0.7 wt% agglomerated silica of 3.2 - 3.9 µm average agglomerate size (agglomerates made of primary size 0.04µm) at a 60/40 (coPET/PET) wt ratio, dried sufficiently to remove excess moisture to less than 50 ppm and then melted at 285°C in an extruder to produce melt stream (II) for the heat seal layer.

The layers I and II described above were separately extruded and combined in a circular feedblock and extruded through a T-shaped die to form a multilayered sheet with a total thickness of 170 µm (6.68 mil). The relative layer thickness, expressed as a percentage of the total thickness, was 9750/012.5%, respectively. The electrostatic casting method was used to wind the sheet around a mirror finished casting drum with a surface temperature of 25°C, to cool the sheet for solidification. This non-stretched sheet was heated to 90°C by passing over a series of heated rollers and then stretched 3.2 times in the longitudinal direction using different roll speeds which is well known in the art as a machine direction orientor. The resulting uniaxial stretched sheet was next stretched 4 times in the width direction by means of a series of separating clips inside an oven and known as a tenter stretcher, which is well known in the art. The biaxially stretched film was heat set by heat treatment at 235°C while relaxing the clip separation distance by 8%. The copolyester layer (II) thickness of the film obtained was 0.3 µm (0.012 mil), and the total film thickness was 12.2 µm (0.48 mil). The oriented polyester film had a room temperature machine direction tensile modulus of 4.8 GPa and a machine direction stress at 5% elongation of 125 MPa.

The multilayered film was wound into a roll for subsequent barrier coating, i.e., metallization, where aluminum was coated on the outer surface of layer I, using the well-known vacuum vapor deposition technique at the speed of 7.11- 7.62 m/s (1400 - 1500 fpm). The Aluminum layer thickness was indirectly measured by optical density (-log 1/T, where T= It/li ratio of transmitted to incident light intensities). Aluminum was coated to an optical density between 2.2 to 3.2.

To produce the final tubular can liner, metallized multilayered films as described above were coated on their barrier layer, (metal surface) with a polymer or polymer blend that served as a BLHSC. The BLHSC must heat seal to the reverse film side copolyester layer II, as well as serving as a heat seal to the paperboard or as a substrate for paperboard adhesives. Rolls of metallized film were unwound from a pay off reel and coated with a melt extruded blend of polymers onto the metal surface using the well-known melt extrusion coating technique. Polymer melts at 315.5°C(600°F) were extruded from a die height of 203.2 mm (8") onto the metallized film held between a rubber nip and a frosted chill roll. The chill roll was held at a surface temperature of 12.8°C (55°F) and rotating at a surface speed of 2.54 m/s (500 fpm). The coating thickness was 12.7 - 17.8 µm (0.50- 0.70 mil). The extrusion coatings were composed of varying percentages of the following materials, and described in the examples; poly(ethylene-co-methylacrylate, 21 wt% MA, MI of 6) (EMA) from Exxon Chemical Corp., low density polyethylene (LDPE, MI of 7) from Chevron Phillips Chemical Corp. and known as 1017, poly(ethylene-co-methylacrylate-coacrylic acid, MI of 5, Acid No. of 45, 18 wt% MA) (EMA-EAA) from Exxon Chemical Corp., and a Diatomaceous Earth particulate of 15 µm average particle size dispersed in LDPE at 20 wt% (DE-LDPE), obtained from Ampacet Corp. and known as 70-12392.

As listed in Table 1 and in the Example descriptions below, extrusion coating of a heat seal layer to the BLHSC were applied either with or without an in-line primer applied to the metal surface before extrusion coating. The primer was either an aqueous solution of poly(ethyleneimine) (PEI) from Mica Corporation known as A 131 X, or an aqueous dispersion of poly(ethylene-co-acrylic acid, 20 wt% AA) (EAA) from Michelman Corporation known as Michelman Primer 4983R, also indicated in Table 1. Primers were applied at 1 pound per ream wet weight (solution weight or dispersion weight), with the PEI solution at 1 wt% solids and the EAA dispersion at 2 wt%. Passing the web through an oven immediately before the extrusion coating station dried the primer. When the primer was not applied, corona treatment of the metal surface was used. The resulting extrusion-coated film was wound onto a take up reel.

To Example 1, a blend of 98 wt % EMA and 2 wt% DE-LDPE was extrusion coated onto the metal surface which was first primed with PEI.

### Example 2

Example 2 was prepared using the same metallized film as in Example 1. It was extrusion coated using the same process, except that the extrusion coating composition was a blend of 29.4 wt% EMA, 68.6 wt% LDPE and 2 wt% DE-LDPE. The metal was not primed but was corona treated.

### Example 3

Example 3 was prepared using the same metallized film as in Example 1, the same extrusion coating formulation as in Example 1, except that the metal surface was corona treated and it was not primed.

### Example 4

Example 4 was a coextruded film prepared as described in Example 1, but having a 152µm (0.60 mil) total thickness and a similar machine direction tensile modulus of 4.8 GPa and stress at 5% elongation of 125 MPa. The core layer (I) was 14.94 µm (0.588 mil). Layer II was the same thickness as in Example 1, the film was metallized as in Example 1 and the extrusion coating composition was a blend of 833.3wt % EMA, 14.7 wt% EMA-EAA & 2 wt% DE-LDPE. The metal surface was corona treated.

### Example 5

Example 5 was prepared as in Example 4, except that the metal surface was not corona treated, but was primed with EAA.

### Example 6

Example 6 was prepared from the same metallized film in Example 4. The extrusion coating polymer blend was 19.6 wt % EMA, 58.9 wt% LDPE, 19.6 wt% EMA-EAA & 2 wt% DE-LDPE and corona treatment of the metal surface was used with no primer.

### Example 7

Example 7 was prepared from the same metallized film as in Example 4. The extrusion coating polymer blend was 19.6 wt % EMA, 58.9 wt% LDPE,19.6 wt% EMA-EAA and 2 wt% DE-LDPE and the metal surface was not corona treated, but primed with EAA.

### Example 8

Example 8 was prepared from the same metallized film as in Example 4. The extrusion coating polymer blend was 19.1 wt % EMA, 57.4 wt% LDPE, 19.1 wt% EMA-AA and 2.4 wt% DE-LDPE and the metal surface was not corona treated, but primed with EAA.

### Example 9

Example 9 was prepared from the same metallized film as in Example 4. The extrusion coating polymer blend was 19.1 wt % EMA, 57.4 wt% LDPE,19.1 wt% EMA-AA and 2.4 wt% DE-LDPE and the metal surface was corona treated, but was not primed.

### Example 10

Example 10 was the coextruded polyester film of 12.2 µm (0.48 mil) in Example 1. The extrusion coating polymer blend was 19.1 wt % EMA, 57.4 wt% LDPE, 19.1 wt% EMA-AA and 2.4 wt% DE-LDPE and the metal surface was not corona treated, but was primed with EAA.

### Example 11

Example 11 was prepared from the same metallized film as in Example 10. The extrusion coating polymer blend was 19.1wt % EMA, 57.4 wt% LDPE, 19.1 wt% EMA-AA and 2.4 wt% DE-LDPE and the metal surface was corona treated and was not primed.

### Comparative Example 1

Comparative Example 1 is the heat seal results for the seal between the extrusion coating side of Example 3, and the heat seal copolyester layer II side of a two-layer coextruded polyester film of 15.2 µm (0.60 mil) total thickness prepared as in Example 1, except that layer II copolyester was 3 µm (0.12 mil) thick and made from a poly(ethylene glycol-co-isophthalic acid) terephthalate of 17 mole % isophthalic acid (IPA) and containing 0.6 wt % silica particles of 4.0 µm average particle size. The core layer contained 0.08 wt% silica particles of 1.4 µm. This film was not suitable for high speed metallization due to blocking that removes excessive amounts of the metal layer during rewinding.

### Comparative Example 2

Comparative Example 2 is the heat seal results for the seal between the extrusion coating side of Example 3 and the heat seal copolyester layer II side of a two-layer coextruded polyester film of 15.2 µm (0.60 mil) total thickness prepared as in Example 1, except that layer II copolyester was 3 µm (0.12 mil) thick and made from a copolyester of 33 mole% 1,4-cyclohexane dimethanol (CHDM) (70 ml/g (0.70 dl/g) intrinsic viscosity) from Eastman Chemical Company of Kingsport TN, and known as Eastar 6763. Layer II contained 0.6 wt % silica particles of 4.0 µm wt average particle size. The core layer contained 0.08 wt% silica particles of 1.4 µm. This film was not suitable for high speed metallization due to blocking that removes excessive amounts of the metal layer during rewinding.

### Comparative Example 3

Comparative Example 3 is the heat seal results for a seal between the extrusion coating side of Example 9, and the heat seal layer H side of a commercially available coextruded polyester film, Melinex 850H, that is suitable for high speed metallization, having a total thickness of 12.2 µm (0.48 mil) and produced by DuPont-Teijin Company. This Melinex 850H sample showed a wide heat seal and hot tack temperature range when sealed with the copolyester side to itself using the same heat sealer employed for Table 1. For example, the seals and hot tack were measured for 48 ga Melinex 850H at 0.50 seconds dwell, 206.8 KPa (30 psi) bar pressure, one heated bar and a Teflon^{®} coated rubber opposing bar. Seal strengths were 236 g/cm (600 g/in) or limited by film tear strength of approx. 177 g/cm (450 g/in) when sealed between 93.3°C to 176.7°C (200°F to 350°F). Hot tack was 118 g/cm (300 g/in) or limited by film tear strength at 118 g/cm (300 g/in) when sealed between 93.3°C to 176.7°C (200°F to 350°F).

### Comparative Example 4

Comparative Example 4 is the heat seal results for the seal between the extrusion coating side of Example 9, and the nonheat seal side of the commercially available coextruded polyester film Melinex 850H, having a total thickness of 12.2 µm (0.48 mil) and produced by DuPont-Teijin Company. Melinex 850H is suitable for high speed metallization.

### Comparative Example 5

Comparative Example 5 is the heat seal results for the seal between the extrusion coating side of Example 9, and the heat seal copolyester layer II side of a two-layer coextruded polyester film of 15.2 µm (0.60 mil) total thickness prepared as in Example 1, except that layer II copolyester was 3 µm (0.12 mil) thick and made from a poly(ethylene glycol-co-isophthalic acid) terephthalate of 17 mole % isophthalic acid (IPA) and containing 0.6 wt% silica particles of 4.0 µm average particle size. The core layer contained 0.08 wt% silica particles of 1.4 µm. This film is not suitable for high speed metallization due to blocking that removes excessive amounts of the metal layer during rewinding.

### Comparative Example 6

Comparative Example 6 is the heat seal results for the seal between the extrusion coating side of Example 9, and the heat seal copolyester layer II side of a two-layer coextruded polyester film of 15.2 µm (0.60 mil) total thickness prepared as in Example 1, except that layer II copolyester was 3 µm (0.12 mil) thick and made from a copolyester of 33 mole % 1,4 cyclohexane dimethanol (CHDM) (70 ml/g (0.70 dl/g) intrinsic viscosity) from Eastman Chemical Company of Kingsport TN, and known as Eastar 6763. Layer II contained 0.6 wt % silica particles of 4.0 µm average particle size. The core layer contained 0.08 wt% silica particles of 1.4 µm. This film is not suitable for high speed metallization due to blocking that removes excessive amounts of the metal layer during rewinding.

| TABLE I | | | | | | |
|---|---|---|---|---|---|---|
| Example # | Primer Type under BLHSC coating | Suitable for Metallization | Blocking Tendency of fresh BLHSC coating | Fresh BLHSC Coating Adhesion to Aluminum (g/in) | Aged BLHSC & Aged seal (250F/30psi) BLHSC-to-coPET Seal strength (g/in, 180°) | COF Layer II, 50°C, film-to Stainless Steel, static/kinetic |
| 1 | PEI | Yes | High | 30-40 | | 0.30/0.28 |
| 2 | Corona | Yes | Low | 400-600 | 329 | 0.35/0.31 |
| 3 | Corona | Yes | High | 70-100 | 860 | 0.31/0.28 |
| 4 | Corona | Yes | High | 500-1000 | - | 0.29/0.27 |
| 5 | EAA | Yes | High | 800-900 | - | 0.31/0.28 |
| 6 | Corona | Yes | Low | 400-800 | - | Same as Ex 4 |
| 7 | EAA | Yes | Low | 1000-1200 | - | Same as Ex 4 |
| 8 | EAA | Yes | Low | 890-920 | 980-1250 | 0.33/0.29 |
| 9 | Corona | Yes | Low | 1000-1100 | 900-940 | 0.34/0.30 |
| 10 | EAA | Yes | Low | - | 820-1100 | 0.34/0.30 |
| 11 | Corona | Yes | Low | - | 870-1000 | 0.35/0.30 |
| Comp 1 | NA. | No | Ex 3 High | NA | seal-to-Ex 3 320 | - |
| Comp 2 | NA | No | Ex 3 High | NA | seal-to-Ex 3 620 | - |
| Comp 3 | NA | Yes | Ex 9 Low | - | seal-to-Ex 9 200-310 | - |
| Comp 4 | NA | Yes | Ex 9 Low | NA | seal-to-Ex 9 180-240 | - |
| Comp 5 | NA | No | Ex 9 Low | NA | seal-to-Ex 9 565-645 | - |
| Comp 6 | NA | No | Ex9 Low | NA | seal-to-Ex 9 500-614 | - |

Metallized samples were prepared for barrier testing by applying a 50.8 µm (2 mil) clear cast polypropylene adhesive tape to the metal. Oxygen transmission rate (02TR) was tested at room temperature and at 0% relative humidity conditions. 02TR values were between 6.12 and 10.71 ml/m²-day-MPa (0.04 to 0.07 cc/100 in²-day-atm). Moisture transmission rate (MVTR) values, measured at 37.8°C (100°F) and 90% relative humidity, were between 0.155 and 0.388 g/m²-day (0.01 and 0.025 g/100 in²-day).

MVTR and 02TR values were also measured on the samples after applying the extrusion coated heat seal layer onto the barrier layer (metallized side). MVTR and 02TR values for the extrusion coated films were equivalent to those measured for the metallized samples before extrusion coating.

Table 1 lists the primer type used for the BLHSC, suitability for metallization, blocking tendency observed for the freshly extrusion coated (BLHSC) roll, BLHSC extrusion coating adhesion to aluminum measured on fresh coatings as a peel force after self-sealing, the aged lap heat seal strength between the extrusion coating (BLHSC) and the copolyester layer II, and the coefficient of friction between Layer II and 50C stainless steel.

Heat seals were formed by first allowing the extrusion coatings (BLHSC) to age at least 3 weeks. Then the heat seals were allowed to age 1 week at 50°C before measuring the seal strength. Heat seals between the extrusion coating layer (BLHSC) and the copolyesterlayer surface were formed with a Sentinel laboratory heat sealer fitted with one heated steel flat bar and an opposing flat rubber bar with a Teflon^{®} coated cover of 76.2 µm (3 mils) thickness. The cover was a resin impregnated fiber-glass matting to which a Teflon release coating was applied to the surfaces. The heated steel flat bar was set to 121.1 °C (250°F) with a dwell time of 0.6 seconds and a bar pressure of 206.84 kPa (30 psi) (bar pressure against the film) to form seals. To simulate lap heat seals, seals were formed using three sheets of film to avoid sticking of the BLHSC layer to the opposing Teflon^{®} coated flat rubber bar. The positioning of samples during sealing for BLHSC-to-coPET was: A-B-C / A-B-C /C-B-A where "A" represents copolyester layer II, the "C" represents coating, the "B" represents the core and "/" represents a seal surface.

To measure the BLHSC seal strength to the copolyester layer II surfaces of clear film Samples (whose opposite side was not metallized nor BLHSC coated), the copolyester Layer II surface of a clear film was sealed to the BHSLC of another film. In this case the sample positioning during sealing was A-B-C/A°-B° where "A°" represents copolyester layer II of a clear film, "B°" represents the core of a clear film and the "A", "B", and "C" represent the copolyester layer II, the core and the BLHSC layer respectively, for an aluminum metallized coextruded OPET having a BLHSC layer. Peak seal strengths were measured for a 25.4 mm (1") seal length, peeled with a grip separation rate of 30.48 cm/min (12 in/min) in the machine direction. Peel angle was a 180° between separating surface "A" and surface "C", where the separating A-B-C film was peeled through a 180° bending angle relative to the flat A-B-C/A-B-C sealed ply. In the clear sample case, A-B-C film was peeled through 180° relative to the flat A° -B° film. The 180° was chosen because attempts to peel at 90° between both substrates was unable to maintain the 90° peel which varied strongly among different test samples. Ability to maintain a constant peel angle is important for comparison of examples. The peel angle of separation in actual spiral cans is expected to be best simulated by 180 degree separation of one liner layer away from a flat and rigid second liner, where a non flexing "A" copolyester layer II surface is rigid and the flexing liner is the "C" BLHSC surface.

## Claims

1. A metallized, multilayer, high barrier, oriented thermoplastic polyester film suitable for forming an inner liner of a spiral wound container comprising:
a) a core layer of polyester;
b) a layer of a heat sealable copolyester positioned adjacent to one surface of the core layer;
c) a metal film positioned adjacent an opposite surface of the core layer; and
d) a barrier layer heat sealable coating layer positioned adjacent the metal film which is capable of adhering to the metal film and does not adhere to the heat sealable copolyester at ambient conditions.

2. The film of claim 1, wherein the heat sealable copolyester comprises 10 mole % or more of 1,4-cyclohexane dimethanol diol.

3. The film of claim 1, wherein the metal film comprises a material selected from the group consisting of aluminum, aluminum oxide and silicon oxide.

4. The film of claim 3, wherein the aluminum has an optical density greater than 2.0.

5. The film of claim 3, wherein the aluminum has an optical density greater than 2.2.

6. The film of claim 3, wherein the aluminum has an optical density greater than 2.8.

7. The film of claim 1, further comprising a metal barrier receiving layer positioned between the metal film and the core layer.

8. The film of claim 7, wherein the metal barrier-receiving layer is 0.1 to 1 µm in thickness.

9. The film of claim 7, wherein the metal barrier receiving layer is acrylic polymer, polyvinylalcohol or a copolyester.

10. The film of claim 1, wherein at least a portion of said barrier layer heat seal coating layer is a blend of polyethylene and ethylenemethacrylate copolymers.

11. The film of claim 1, wherein at least a portion of said barrier layer heat sealable coating layer is polyethylene.

12. The film of claim 1, wherein barrier layer heat sealable coating layer is formed from a layer of a blend of polyethylene and ethylenemethacrylate copolymers and polyethylene.

13. The film of claim 1, wherein barrier layer heat sealable coating layer contains particles.

14. The film of claim 1, wherein the heat sealable copolyester is less than 1 µm in thickness.

15. The film of claim 1, wherein the core layer and the heat sealable copolyester layer are biaxially stretched.

16. The film of claim 1, wherein the core layer has a glass transition temperature (Tg) above 50°C.

17. The film of claim 1, wherein the core layer is polyethylene terephthalate.

18. The film of claim 1, wherein the core layer is at least one polyester or copolyester selected from the group consisting of polyethylene terephthalate, polyethylene naphthalate, polybutylene terephthalate and polybutylene naphthalate.

19. The film of claim 1, wherein the heat sealable copolyester is polyethylene terephthalate and at-least one polyester selected from the group consisting of polyethylene naphthalate, polybutylene terephthalate, polyethylene isophthalate and polybutylene naphthalate.

20. The film of claim 1, wherein the heat sealable copolyester layer has a lower melting point (Tm) than the core layer.

21. The film of claim 1, wherein the heat sealable copolyester layer has a lower glass transition temperature (Tg) than the core layer.

22. The film of claim 1, wherein the heat sealable copolyester layer has a lower crystalline content than the core layer.

23. The film of claim 1, wherein the heat sealable copolyester layer is derived from an aliphatic diacid and/or aliphatic diol where the aliphatic content of the diacid is more than 40 wt% of the aliphatic diacid and the aliphatic content of the diol is more than 60 wt% of the aliphatic diol.

24. The film of claim 1, wherein the heat sealable copolyester layer contains 0.2 to 0.3 wt%, based on the weight of the heat sealable copolyester layer, of particles having a diameter of 3.5 µm.

25. The film of claim 1, wherein the core layer contains 0.05 to 0.5 wt%, based on the weight of the core layer, of particles of a mean diameter of 10 µm to 0.1 µm and 0.2 wt% to 1 wt%, based on the weight of the core layer, of particles of a mean diameter of 0.1 µm to 0.5 µm.

26. The film of claim 1, wherein the metal film has a thickness of 7.5 nm (75Å) to 50 nm (500Å).

27. A spiral wound container comprising:
- a paperboard substrate;
- a film according to any of the claims 1 to 26,
- wherein portions of the barrier layer heat sealable coating layer are heat sealed to portions of the heat sealable copolyester.

## Patentansprüche

1. Metallisierte, mehrschichtige, hochsperrende, orientierte thermoplastische Polyesterfolie, die zur Bildung einer Innenauskleidung eines spiralförmig gewundenen Behälters, umfassend:
a) eine Kernschicht aus Polyester;
b) eine Schicht aus einem heißsiegelfähigen Copolyester, die an eine Oberfläche der Kernschicht angrenzend positioniert ist;
c) einen Metallfilm, der an eine gegenüberliegende Oberfläche der Kernschicht angrenzend positioniert ist; und
d) eine heißsiegelfähige Sperrschicht-Überzugsschicht, die an den Metallfilm angrenzend positioniert ist, in der Lage ist, auf dem Metallfilm zu haften, und bei Umgebungsbedingungen nicht auf dem heißsiegelfähigen Copolymer haftet,
geeignet ist.

2. Folie nach Anspruch 1, wobei der heißsiegelfähige Copolyester 10 Mol-% oder mehr 1,4-Cyclohexandimethanoldiol enthält.

3. Folie nach Anspruch 1, wobei der Metallfilm ein Material aus der Gruppe bestehend aus Aluminium, Aluminiumoxid und Siliciumoxid umfasst.

4. Folie nach Anspruch 3, wobei das Aluminium eine optische Dichte von mehr als 2,0 aufweist.

5. Folie nach Anspruch 3, wobei das Aluminium eine optische Dichte von mehr als 2,2 aufweist.

6. Folie nach Anspruch 3, wobei das Aluminium eine optische Dichte von mehr als 2,8 aufweist.

7. Folie nach Anspruch 1, ferner umfassend eine Metallsperreempfangsschicht, die zwischen dem Metallfilm und der Kernschicht angeordnet ist.

8. Folie nach Anspruch 7, wobei die Metallsperreempfangsschicht eine Dicke von 0,1 bis 1 µm aufweist.

9. Folie nach Anspruch 7, wobei die Metallsperreempfangsschicht Acrylpolymer, Polyvinylalkohol oder ein Copolyester ist.

10. Folie nach Anspruch 1, wobei mindestens ein Teil der Sperrschicht-Heißsiegelüberzugsschicht eine Mischung aus Polyethylen und Ethylen-Methacrylat-Copolymeren ist.

11. Folie nach Anspruch 1, wobei mindestens ein Teil der heißsiegelfähigen Sperrschicht-Überzugsschicht Polyethylen ist.

12. Folie nach Anspruch 1, wobei die heißsiegelfähige Sperrschicht-Überzugsschicht aus einer Schicht aus einer Mischung aus Polyethylen und Ethylen-Methacrylat-Copolymeren und Polyethylen gebildet ist.

13. Folie nach Anspruch 1, wobei die heißsiegelfähige Sperrschicht-Überzugsschicht Teilchen enthält.

14. Folie nach Anspruch 1, wobei der heißsiegelfähige Copolyester eine Dicke von weniger als 1 µm aufweist.

15. Folie nach Anspruch 1, wobei die Kernschicht und die Schicht aus heißsiegelfähigem Copolyester biaxial verstreckt sind.

16. Folie nach Anspruch 1, wobei die Kernschicht eine Glasübergangstemperatur (Tg) über 50°C aufweist.

17. Folie nach Anspruch 1, wobei die Kernschicht Polyethylenterephthalat ist.

18. Folie nach Anspruch 1, wobei die Kernschicht mindestens ein Polyester oder Copolyester aus der Gruppe bestehend aus Polyethylenterephthalat, Polyethylennaphthalat, Polybutylenterephthalat und Polybutylennaphthalat ist.

19. Folie nach Anspruch 1, wobei der heißsiegelfähige Copolyester Polyethylenterephthalat und mindestens ein Polyester aus der Gruppe bestehend aus Polyethylennaphthalat, Polybutylenterephthalat, Polyethylenisophthalat und Polybutylennaphthalat ist.

20. Folie nach Anspruch 1, wobei die Schicht aus heißsiegelfähigem Copolyester einen niedrigeren Schmelzpunkt (Tm) aufweist als die Kernschicht.

21. Folie nach Anspruch 1, wobei die Schicht aus heißsiegelfähigem Copolyester eine niedrigere Glasübergangstemperatur (Tg) aufweist als die Kernschicht.

22. Folie nach Anspruch 1, wobei die Schicht aus heißsiegelfähigem Copolyester einen niedrigeren kristallinen Gehalt aufweist als die Kernschicht.

23. Folie nach Anspruch 1, wobei sich die Schicht aus heißsiegelfähigem Copolyester von einer aliphatischen Disäure und/oder einem aliphatischen Diol ableitet, wobei der aliphatische Gehalt der Disäure mehr als 40 Gew.-% der aliphatischen Disäure beträgt und der aliphatische Gehalt des Diols mehr als 60 Gew.-% des aliphatischen Diols beträgt.

24. Folie nach Anspruch 1, wobei die Schicht aus heißsiegelfähigem Copolyester 0,2 bis 0,3 Gew.-%, bezogen auf das Gewicht der Schicht aus heißsiegelfähigem Copolyester, Teilchen mit einem Durchmesser von 3,5 µm enthält.

25. Folie nach Anspruch 1, wobei die Kernschicht 0,05 bis 0,5 Gew.-%, bezogen auf das Gewicht der Kernschicht, Teilchen mit einem mittleren Durchmesser von 10 µm bis 0,1 µm und 0,2 bis 1 Gew.-%, bezogen auf das Gewicht der Kernschicht, Teilchen mit einem mittleren Durchmesser von 0,1 µm bis 0,5 µm enthält.

26. Folie nach Anspruch 1, wobei der Metallfilm eine Dicke von 7,5 nm (75 Å) bis 50 nm (500 Å) aufweist.

27. Spiralförmig gewickelter Behälter, umfassend:
- ein Pappsubstrat;
- eine Folie nach einem der Ansprüche 1 bis 26;
- wobei Teile der heißsiegelfähigen Sperrschicht-Überzugsschicht an Teile des heißsiegelfähigen Copolyesters heißgesiegelt sind.

## Revendications

1. Film polyester thermoplastique orienté, métallisé, haute barrière, multicouches destiné à former une garniture interne d'un récipient enroulé en spirale comportant :
a) une couche de polyester formant le coeur ;
b) une couche de copolyester soudable à chaud adjacente à une face de la couche formant le coeur :
c) un film métallique disposé adjacent à une face opposée de la couche formant le coeur et
d) une couche de revêtement thermo soudable formant couche haute barrière disposée adjacente au film métallique, pouvant adhérer au film métallique et n'adhérant pas au copolyester soudable à chaud dans les conditions ambiantes.

2. Le film de la revendication 1, dans lequel le copolyester soudable à chaud comporte 10% en mole ou plus de 1, 4-cyclohexane diol.

3. Le film de la revendication 1, dans lequel le film métallique comprend un matériau choisi dans le groupe comportant l'aluminium, l'oxyde d'aluminium et l'oxyde de silicium.

4. Le film de la revendication 3, dans lequel l'aluminium a une densité optique supérieure à 2,0.

5. Le film de la revendication 3, dans lequel l'aluminium a une densité optique supérieure à 2,2.

6. Le film de la revendication 3, dans lequel l'aluminium a une densité optique supérieure à 2,8.

7. Le film de la revendication 1, comportant en outre une couche recevant une barrière métallique disposée entre le film métallique et la couche formant le coeur.

8. Le film de la revendication 7, dans lequel la couche recevant une barrière métallique a une épaisseur de 0,1 à 1 µm.

9. Le film de la revendication 7, dans lequel la couche recevant une barrière métallique est un polymère acrylique, un alcool polyvinylique ou un copolyester.

10. Le film de la revendication 1, dans lequel au moins une partie de ladite couche de revêtement thermo soudable formant couche barrière est un mélange de copolymères de polyéthylène et de méthacrylate d'éthylène.

11. Le film de la revendication 1, dans lequel au moins une partie de ladite couche de revêtement thermo soudable formant couche barrière est du polyéthylène.

12. Le film de la revendication 1, dans lequel ladite couche de revêtement thermo soudable formant couche barrière est formée par une couche constituée par un mélange de copolymères de polyéthylène et de méthacrylate d'éthylène et par du polyéthylène.

13. Le film de la revendication 1, dans lequel ladite couche de revêtement thermo soudable formant couche barrière contient des particules.

14. Le film de la revendication 1, dans lequel le copolyester soudable à chaud a une épaisseur inférieure à 1 µm.

15. Le film de la revendication 1, dans lequel la couche formant le coeur et ladite couche de copolyester soudable à chaud sont tendues selon deux axes.

16. Le film de la revendication 1, dans lequel la couche formant le coeur a une température de transition vitreuse (Tg) supérieure à 50°C.

17. Le film de la revendication 1, dans lequel la couche formant le coeur est du téréphtalate de polyéthylène.

18. Le film de la revendication 1, dans lequel la couche formant le coeur est au moins un polyester ou copolyester choisi dans le groupe constitué par le téréphtalate de polyéthylène, le naphtalate de polyéthylène, le téréphtalate de polybutylène et le naphtalate de polybutylène.

19. Le film de la revendication 1, dans lequel la couche de copolyester soudable à chaud est du téréphtalate de polyéthylène et au moins un polyester choisi dans le groupe constitué par le naphtalate de polyéthylène, le téréphtalate de polybutylène, l'isophtalate de polyéthylène, et le naphtalate de polybutylène.

20. Le film de la revendication 1, dans lequel la couche de copolyester soudable à chaud a un point de fusion (Tm) inférieur à celui de la couche formant le coeur.

21. Le film de la revendication 1, dans lequel la couche de copolyester soudable à chaud a une température de transition vitreuse (Tg) inférieure à celle de la couche formant le coeur.

22. Le film de la revendication 1, dans lequel la couche de copolyester soudable à chaud a une teneur cristalline inférieure à celle de la couche formant le coeur.

23. Le film de la revendication 1, dans lequel la couche de copolyester soudable à chaud est dérivée d'un diacide aliphatique et/ou diol aliphatique, la teneur aliphatique du diacide étant supérieure à 40 % en poids du diacide aliphatique et la teneur aliphatique du diol étant supérieure à 60 % en poids du diol aliphatique.

24. Le film de la revendication 1, dans lequel la couche de copolyester soudable à chaud contient 0,2 à 0,3 % en poids, rapporté au poids de la couche de copolyester soudable à chaud, de particules ayant un diamètre de 3,5 µm.

25. Le film de la revendication 1, dans lequel la couche formant le coeur contient 0,05 à 0,5 % en poids, rapporté au poids de la couche formant le coeur, de particules d'un diamètre moyen de 10 µm à 0,1 µm et 0,2 % à 1 % en poids, rapporté au poids de la couche formant le coeur de particules d'un diamètre moyen de 0,1 à 0,5 µm.

26. Le film de la revendication 1, dans lequel le film métallique a une épaisseur de 7,5 nm (75 Å) à 50 nm (500 Å).

27. Récipient enroulé en spirale comportant :
- un substrat de carton ;
- un film selon l'une quelconque des revendications 1 à 26 ;
- dans lequel des parties de la couche de revêtement thermo soudable formant couche barrière sont thermo soudées à des parties du copolyester thermo soudable.
